# EUROPEAN PATENT APPLICATION

(11) **EP 4 231 419 A1**
(43) Date of publication of application: **23.08.2023**
(21) Application number: 21883077.6
(22) Date of filing: 08.10.2021
(51) Int. Cl.: H01M 50/20, B60L 50/64

(54) **BATTERY CASE**

(30) Priority: 19.10.2020 KR 20200135172
(71) Applicant: POSCO Co., Ltd, Pohang-si, Gyeongsangbuk-do 37859 (KR)
(72) Inventor: SEOK, Dong-Yoon, Seoul 06194 (KR); LEE, Hong-Woo, Incheon 21985 (KR); KIM, Jae-Hyun, Incheon 21985 (KR)
(74) Representative: Meissner Bolte Partnerschaft mbB
(86) International application number: PCT/KR2021/013913
(87) International publication number: WO 2022/086006

(57) **Abstract**

The present invention relates to a battery case capable of minimizing the deformation of a battery by effectively coping with side collisions of an electric vehicle and the like, the battery case comprising: a case body for accommodating a battery cell; and a cover coupled to the case body, wherein the case body comprises: a bottom plate; side frames which are coupled to the bottom plate to surround the battery cell, and which include inner sidewalls and outer sidewalls; a mounting frame coupled to the outer sidewalls of the side frames; and at least one reinforcing material, which is arranged on the bottom plate and has longitudinal both-end portions inserted into the side frames, wherein the end portions of the reinforcing material can come in contact with the mounting frame by penetrating the inner sidewalls and the outer sidewalls of the side frames.

## Description

### [Technical Field]

The present disclosure relates to a battery case which may minimize a deformation amount of a battery in an event of a side collision of an electric vehicle and the like, for example.

### [Background Art]

A battery mounted in an electric vehicle or the like may cause serious danger to a driver and a passenger by leading to fire and explosion in an event of a vehicle collision. In order to prevent this event, a battery case itself may also be equipped with a reinforcing material to prepare for such a collision accident apart from a collision reinforcing material included in a vehicle body.

In particular, the battery may have less space to absorb collision energy in a lateral direction of the vehicle than a front-rear direction thereof, and it may thus be important for the battery to protect battery cells therein in an event of a side collision by preparing a structure for coping with the side collision.

The reinforcing material of the battery may mainly be assembled inside or outside of the battery case. For example, a sidewall of the battery case itself may be formed of the reinforcing material, or the reinforcing material may be joined to the inside of the battery case.

When joined, the reinforcing material may commonly have an end thereof joined to an inner surface of the sidewall. However, such a structure may prevent a load of the side collision from being directly transferred to the reinforcing material. That is, the reinforcing material may start to function to support the load after the sidewall forming a closed cross-section of the battery is considerably deformed, which has a limit in suppressing an amount of intrusion into the battery.

(Patent Document 1) JP 6304587 B2

### [Disclosure]

### [Technical Problem Solution]

An object of the present disclosure is to provide a battery case which may minimize a deformation amount of a battery by effectively coping with a side collision of an electric vehicle and the like, for example.

### [Technical Solution]

A battery case according to the present disclosure may include a case body for accommodating a battery cell; and a cover coupled to the case body, wherein the case body includes: a bottom plate; side frames coupled to the bottom plate to surround the battery cell, and including inner sidewalls and outer sidewalls; a mounting frame coupled to the outer sidewall of the side frame; and at least one piece of reinforcing material disposed on the bottom plate and having both ends thereof in a longitudinal direction inserted into the side frames, wherein the end of the reinforcing material is in contact with the mounting frame by passing through the inner sidewall and outer sidewall of the side frame.

### [Advantageous Effects]

As set forth above, according to the present disclosure, the battery case may use the reinforcing material that is coupled to either the side frame or the mounting frame to serve its most important role of protecting the battery cells therein and minimize the amount of intrusion into the battery case in the event of the side collision.

### [Description of Drawings]

FIG. 1 is an exploded perspective view showing a battery case according to a first exemplary embodiment of the present disclosure.
FIG. 2 is a view taken along line I-I' of FIG. 1.
FIG. 3 is a perspective view showing a portion of a side frame shown in FIG.2.
FIG. 4 is a perspective view showing a portion of a reinforcing material shown in FIG. 2.
FIG. 5 is a perspective view showing that the reinforcing material and the side frame are coupled to each other.
FIG. 6 is a view corresponding to FIG. 2 and showing a battery case according to a second exemplary embodiment of the present disclosure.
FIG. 7 is a perspective view showing a portion of a side frame shown in FIG.6.
FIG. 8 is a view corresponding to FIG. 2 and showing a battery case according to a third exemplary embodiment of the present disclosure.
FIG. 9 is a perspective view showing a portion of a reinforcing material shown in FIG. 8.
FIG. 10 is an exploded perspective view showing a battery case according to a fourth exemplary embodiment of the present disclosure.
FIG. 11 is a view taken along line II-II' of FIG. 10.
FIG. 12 is a perspective view showing a portion of a mounting frame shown in FIG. 11.

### [Best Mode]

Hereinafter, exemplary embodiments of the present disclosure are described in detail with reference to the accompanying drawings. In the drawings, the same reference numbers are used throughout to designate the same or equivalent components.

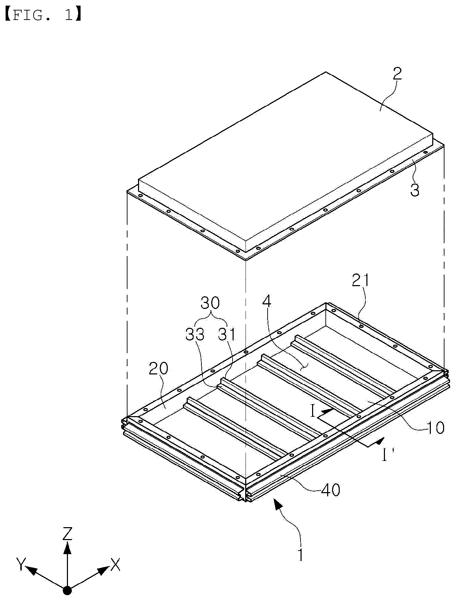

FIG. 1 is an exploded perspective view showing a battery case according to a first exemplary embodiment of the present disclosure. As shown in the drawing, the battery case according to the present disclosure may include a case body 1 and a cover 2.

The battery case may be fixedly installed on an under floor panel (not shown) included in a vehicle body. For example, the battery case may have a substantially rectangular parallelepiped shape, and a plurality of battery cells (not shown) may be accommodated therein.

The case body 1 and the cover 2 may be coupled to each other to form a space therein.

For example, the case body 1 and the cover 2 may have flange parts 3 formed along respective edges thereof, and these flange parts may be overlapped with each other and then assembled with each other by fasteners such as bolts, nuts, and screws.

Alternatively, the flange part 3 formed along the edge of the cover 2 and a side frame 20 of the case body 1 to be described below may be overlapped with each other, and then coupled to each other by fastening each other using the fasteners such as bolts, nuts, and screws.

The cover 2 may be formed of high-strength plastic that may secure sufficient strength while reducing weight and cost, or light metal such as aluminum. When formed of plastic, the cover may be formed by injection molding or compression molding, and when formed of metal, the cover may be formed into a predetermined shape by press processing or the like.

The case body 1 may be formed of metal to more effectively protect battery cells because the case body 1 may be directly exposed to the outside, and is highly likely to be broken and damaged by an external foreign material.

In this case, the case body 1 may be formed by preparing components by machining steel having appropriate strength, for example, material such as ultra-high-strength steel having tensile strength of about 980 MPa or more for its reduced weight, and then assembling and coupling these components with each other.

Hereinafter, for convenience, the battery case according to the present disclosure is described with a focus on the case body 1.

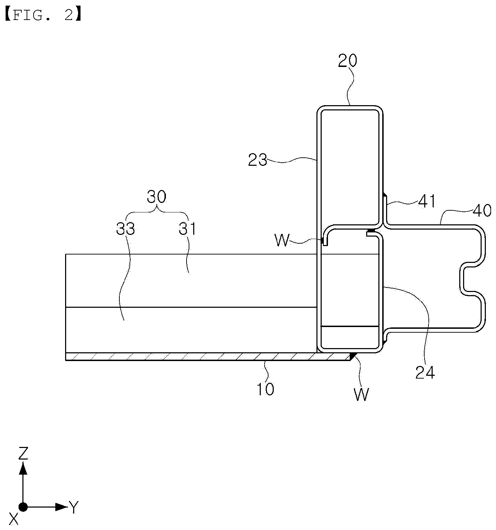

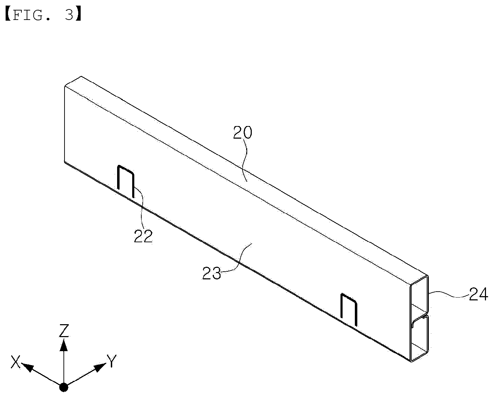

FIG. 2 is a view taken along line I-I' of FIG. 1, and FIG. 3 is a perspective view showing a portion of a side frame shown in FIG. 2.

In the battery case according to the first exemplary embodiment of the present disclosure, the case body 1 may include a bottom plate 10, the side frame 20, and at least one piece of reinforcing material 30.

The bottom plate 10 may be, for example, a flat plate formed of metal such as steel. The flat plate may be prepared by cutting metal to predetermined width and length. The bottom plate may act as a member supporting the battery cells or the like.

A height of the side frame 20 may have connection with and be changed based on a size of the battery cell accommodated in the case body 1. In addition, a plurality of fastening holes 21 for coupling of the side frame with the cover 2 may be arranged in an upper surface of the side frame.

At least four side frames 20 may be positioned to surround the battery cells. For example, the side frames may be disposed along edges of the bottom plate. Both ends of each side frame may be cut obliquely at a predetermined angle (e.g., approximately 45 degrees), then come into contact with respective ends of the corresponding other side frames, and then be joined with each other by welding such as arc welding or laser welding. In this way, the side frames may form the side walls of the case body 1.

As shown in FIG. 3, the side frame 20 may have a through slit 22 formed in a predetermined position of an inner sidewall 23 of each of two side walls disposed in a width direction (e.g., Y-direction in the drawing) of the side frame, the inner side wall 23 forming an inner surface of the case body 1.

The through slit 22 may have a shape corresponding to a cross-sectional shape of the reinforcing material 30 to be described below, and the through slit and the reinforcing material may thus be shape-fitted to each other when an end of the reinforcing material is inserted into the through slit.

For example, the side frame 20 may have an overall rectangular closed cross-section by using metal such as steel or aluminum.

In more detail, the side frame 20 may be formed of a plate such as 1470 Martensitic (MART) steel having a thickness of about 0.8 mm to 1.0 mm produced by the present applicant.

Here, 1470 MART steel is a type of steel having improved crash safety by having tensile strength of 1,470 MPa or more and yield strength of 1,050 MPa or more.

For example, when formed of steel, the side frame 20 may have at least one closed cross-section by bending a single plate having predetermined width and length two or more times and then welding meeting ends thereof. The drawings show the side frame having two rectangular closed cross-sections. Bending or roll forming may be used as the machining.

A shape of the closed cross-section may be adjusted based on a design condition, and the through slit 22 may be formed by punching a slit in advance in a blanking process of the plate.

The bottom plate 10 and the side frame 20 may be coupled to each other by the welding such as the arc welding. The bottom plate may be welded to the bottom of the side frame. Accordingly, the case body 1 may have a space part 4 by the side frames forming the closed cross-sections around the bottom plate.

The case body 1 of the battery case according to the first exemplary embodiment of the present disclosure may include a mounting frame 40 necessary for fixing the battery case to the vehicle body and mounted on its side.

The mounting frame 40 may be coupled to an outer sidewall 24 of the side frame 20 that forms an outer surface of the battery case. For example, the flange 41 positioned on the mounting frame may be welded to the outer sidewall of the side frame by the arc welding or the like.

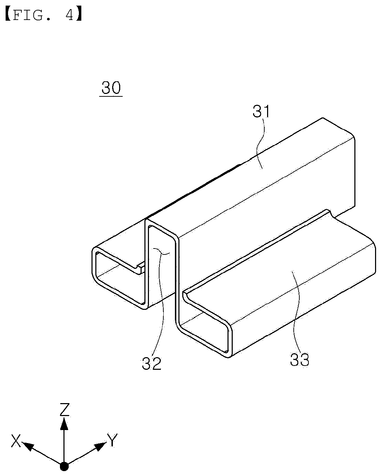

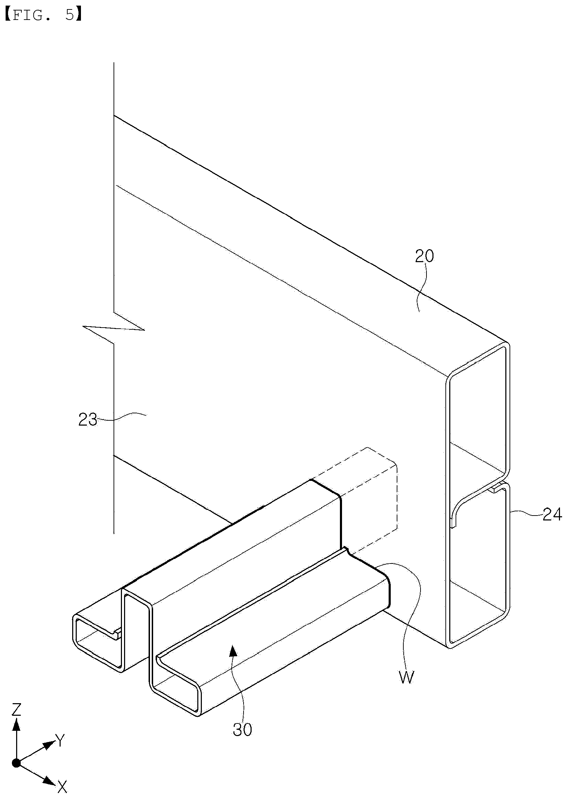

FIG. 4 is a perspective view showing a portion of a reinforcing material shown in FIG. 2, and FIG. 5 is a perspective view showing that the reinforcing material and the side frame are coupled to each other.

The reinforcing material 30 may be fixedly installed on the inner surface of the case body 1 where the battery cells are accommodated, that is, on the bottom plate 10. The reinforcing material may be fixed to the bottom plate by the welding or the like, and a fixing method is not necessarily limited thereto.

In addition, the reinforcing material 30 may be integrally formed by machining a single sheet of metal, such as steel. The reinforcing material may be manufactured by the bending, the roll forming, forming, or the like.

For example, when manufactured by the roll forming, the reinforcing material 30 may use even ultra-high strength steel having tensile strength of about 980 MPa or more without difficulty. Moreover, when using the roll forming, it may be easier to compensate for springback than using press forming, and reduce a corner radius of the reinforcing material.

In more detail, the reinforcing material 30 may be formed of a plate such as 1470 MART steel having a thickness of about 1.0 mm to 1.2 mm produced by the present applicant.

Here, the thickness of the plate for the reinforcing material 30 may be greater than that of a plate for the side frame 20.

The reinforcing material 30 may be formed by bending a single plate having predetermined width and length several times and molding the same to have a substantially hat-shaped cross-sectional shape. Accordingly, the reinforcing material may include a body 31 formed in a substantially downwardly open U-shape and having a hollow part 32, and a support part 33 extending from an opening end of the hollow part that extends in a longitudinal direction (Y-direction) of the body to each of two sides of the body in a width direction (X-direction). That is, the support part may extend from an end of the body in the width direction (X-direction) of the body.

Here, the support part 33 may also have a closed cross-section by being bent in a direction opposite to a direction in which the body 31 is bent and then welding an end of the support part to the body.

In addition, the support parts may be omitted in some regions of the body that form both ends of the reinforcing material 30 in the longitudinal direction, and both the ends of the reinforcing material having the support parts omitted in this way may be formed by being reflected on the plate in the blanking process. Accordingly, a length of the support part in the longitudinal direction (X-direction) may be shorter than a length of the body.

The support part 33 of the reinforcing material 30 and the bottom plate 10 may be joined to each other by the welding such as the arc welding or the laser welding. For example, the support part 33 may be welded to the bottom plate over its entire length in the longitudinal direction (Y-direction), thereby ensuring watertightness between the support part of the reinforcing material and the bottom plate. In this way, a welded portion may be formed between a flange of the reinforcing material and the bottom plate

Here, the hollow part 32 of the body 31 included in the reinforcing material 30 may have a closed cross-section by being coupled to the bottom plate 10.

In addition to the function of fixing the reinforcing material 30 to the bottom plate 10, the support part 33 may also function to support an arbitrary component installed in the case body 1, such as a cooling plate.

Both the ends of the reinforcing material 30 in the longitudinal direction (Y-direction) may be in contact with the side frames 20, and inserted into and coupled to the side frames. As shown in FIG. 3 and described above, the through slit 22 may be formed in the side frame in contact with the end of the reinforcing material, and the end of the reinforcing material may thus be shape-fitted into the through slit.

In more detail, the body 31 of the reinforcing material 30 may be inserted into the side frame 20 through the through slit 22 and extend into the side frame. As a result, the body may pass through the inner sidewall 23 of the side frame that forms the inner surface of the case body 1, and the end of the body may be in contact with the outer sidewall 24 forming an outer surface of the case body.

Optionally, a concave groove (not shown) may be formed inside the outer sidewall 24 forming the outer surface of the case body 1, and the end of the reinforcing material 30 that extends into the side frame 20, that is, the end of the body 31 may be seated in the concave groove.

The support part 33 of the reinforcing material 30 may be in contact with the inner sidewall 23 of the side frame 20 that forms the inner surface of the case body 1. For example, the support part may not pass through the inner sidewall.

The end of the reinforcing material 30, that is, the end of the body 31, may be inserted and shape-fitted into the through slit 22 of the side frame 20 to completely close the through slit, thereby ensuring watertightness between the end of the reinforcing material and the side frame.

A matching line formed by inserting and shape-fitting the end of the reinforcing material into the through slit 22 may be welded by, for example, the arc welding, the laser welding, or the like, and a welded portion W may thus be formed between the end of the reinforcing material and the side frame as shown in FIG. 5.

It is thus possible to further secure a firm coupling between the end of the reinforcing material 30 and the side frame 20 and the watertightness therebetween simultaneously.

In order to secure the watertightness, the portion in which the components included in the case body 1 are coupled to each other, that is, the welded portion may further use, for example, coating of plastic material such as acrylic resin, epoxy resin, silicone resin, or the like.

At least one piece of reinforcing material 30 may be provided. The number of pieces of reinforcing material may be determined based on a magnitude of an externally applied collision.

As such, in the battery case according to the first exemplary embodiment of the present disclosure, the reinforcing material 30 having the bent hat-shaped cross-section may be disposed on the bottom of the case body 1, and the reinforcing material may extend on the bottom of the case body to be in contact with and inserted into the side frame 20. That is, the reinforcing material may extend and be inserted into and coupled to the side frame.

For example, in the event of a side collision of an electric vehicle or the like, the reinforcing material may function to resist the collision and deformation when collision energy is transferred to and deforms the side frame 20 of the case body 1 in the battery case according to the first exemplary embodiment of the present disclosure.

Therefore, according to the present disclosure, the battery case may protect the cells therein and minimize an amount of intrusion into the battery casein the event of the side collision.

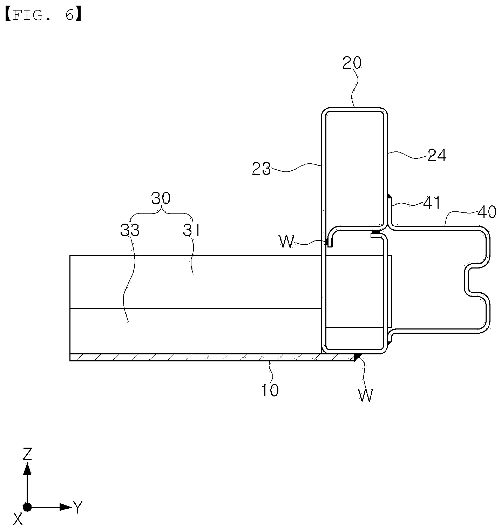

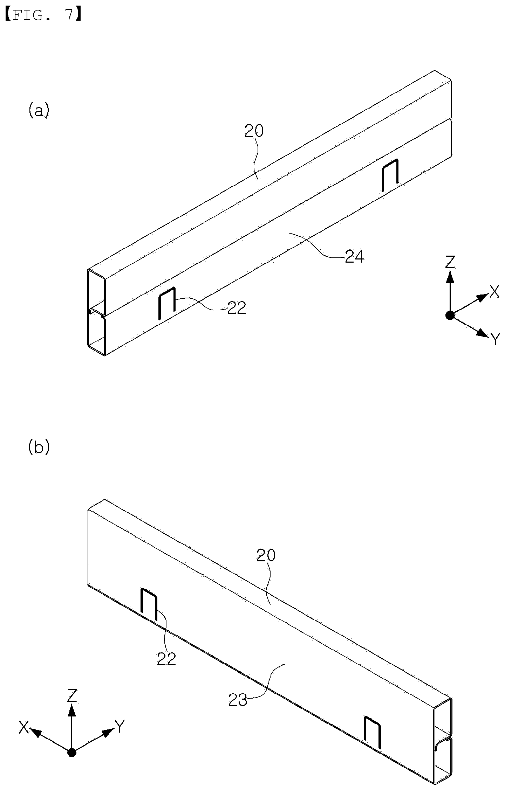

FIG. 6 is a view corresponding to FIG. 2 and showing a battery case according to a second exemplary embodiment of the present disclosure. FIG. 7 is a perspective view showing a portion of a side frame shown in FIG. 6. Here, FIG. 7(a) is a view from an outer surface of a case body 1, and FIG. 7(b) is a view from an inner surface of the case body 1.

In the battery case according to the second exemplary embodiment of the present disclosure, the case body 1 may include a bottom plate 10, a side frame 20, and at least one piece of reinforcing material 30.

Here, the battery case according to the second exemplary embodiment of the present disclosure may be different from the battery case according to the first exemplary embodiment only in the reinforcing material 30 of the case body 1 that passes through the side frame 20. The remaining components thereof may be configured and used in the same manner as described in the first exemplary embodiment of the present disclosure, and the description thus omits detailed descriptions of the configurations and operations of the remaining components.

As shown in FIG. 7, in the side frame 20, a through slit 22 may be formed in a predetermined position of an inner sidewall 23 or an outer sidewall 24, disposed in the width direction (e.g., Y-direction in the drawing) of the side frame.

The through slit 22 may have a shape corresponding to a cross-sectional shape of the reinforcing material 30, and the through slit and the reinforcing material may thus be shape-fitted to each other when an end of the reinforcing material is inserted into the through slit.

For example, the side frame 20 may have an overall rectangular closed cross-section by using metal such as steel or aluminum.

When formed of steel, the side frame 20 may have at least one closed cross-section by bending a single plate having predetermined width and length two or more times and then welding meeting ends thereof. The drawings show the side frame having two rectangular closed cross-sections. Bending, roll forming, or the like may be used as the machining.

A shape of the closed cross-section may be adjusted based on a design condition, and the through slit 22 may be formed by punching a slit in advance in a blanking process of the plate.

When the through slit 22 is formed in the inner sidewall 23 or outer sidewall 24 of the side frame 20, both ends of the reinforcing material 30 in a longitudinal direction (Y-direction) may pass through the side frames in a width direction (Y-direction) and then protrude outward.

The end of the reinforcing material 30, that is, the end of the body 31 may pass through the through slit 22 formed in the inner sidewall 23 or outer sidewall 24 of the side frame 20 and protrude outward from the side frame, and the welding may thus be applied to ensure watertightness of the battery case.

A length of the end of the reinforcing material 30 passing through the side frame 20 and protruding from the side frame in the longitudinal direction (Y-direction) of the reinforcing material may be in a range of about 5 to 10 mm. When the length of the protruding portion is less than 5 mm, the reinforcing material may be difficult to be welded, and when the length is more than 10 mm, it may cause interference between the reinforcing material and nearby parts, thus making it difficult for the reinforcing material to be mounted in the battery case.

In this way, the protruding end of the reinforcing material 30 and the through slit 22 of the side frame 20 may be joined to each other by the welding such as the arc welding or the laser welding to form a welded portion (not shown) therebetween, thereby ensuring watertightness between the end of the reinforcing material and the side frame.

In order to secure the watertightness, the portion in which the components included in the case body 1 are coupled to each other, that is, the welded portion may further use, for example, coating of plastic material such as acrylic resin, epoxy resin, silicone resin, or the like.

Meanwhile, a support part 33 of the reinforcing material 30 may be in contact with the inner sidewall 23 of the side frame 20 that forms the inner surface of the case body 1. For example, the support part may not pass through the inner sidewall.

As such, in the battery case according to the second exemplary embodiment of the present disclosure, the reinforcing material 30 having a bent hat-shaped cross-section may be disposed on the bottom of the case body 1, and the reinforcing material may extend on the bottom of the case body to be in contact with and pass through the side frame 20. That is, the reinforcing material may extend and be inserted into and pass through to be coupled to the side frame.

For example, in an event of a side collision of an electric vehicle or the like, the reinforcing material may function to resist the collision and deformation when collision energy is transferred to and deforms the side frame 20 of the case body 1 in the battery case according to the second exemplary embodiment of the present disclosure.

Therefore, according to the present disclosure, the battery case may protect the cells therein and minimize an amount of intrusion into the battery casein the event of the side collision.

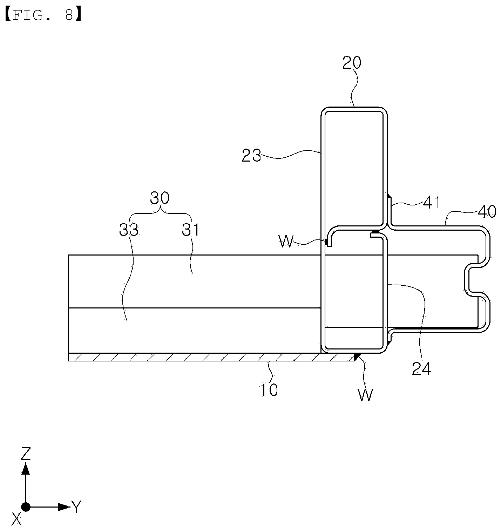

FIG. 8 is a view corresponding to FIG. 2 and showing a battery case according to a third exemplary embodiment of the present disclosure.

In the battery case according to the third exemplary embodiment of the present disclosure, a case body 1 may include a bottom plate 10, a side frame 20, a mounting frame 40, and at least one piece of reinforcing material 30.

Here, the battery case according to the third exemplary embodiment of the present disclosure may be different from the battery case according to the first and second exemplary embodiments only in the reinforcing material 30 of the case body 1 that penetrates through the side frame 20 and is in contact with the mounting frame 40. The remaining components thereof may be configured and used in the same manner as described in the first and second exemplary embodiments of the present disclosure, and the description thus omits detailed descriptions of the configurations and operations of the remaining components.

As described above, the mounting frame 40 may be coupled to an outer sidewall 24 of the side frame 20 that forms an outer surface of the battery case. For example, a flange 41 may be positioned on the mounting frame, and the flange of the mounting frame may be welded to an outer surface of the side frame by arc welding or the like.

The mounting frame 40 may be fixed to, for example, a side member of a vehicle body by bolting or the like. The battery case may thus be fixed to the vehicle body.

In addition, the mounting frame 40 may act as a member first coping with collision among the components of the battery case in an event of the collision.

The mounting frame 40 may be formed by machining a single piece of metal, for example steel.

In more detail, the mounting frame 40 may be formed of a plate such as 1470 MART steel having a thickness of 1.2 mm or more produced by the present applicant.

The mounting frame 40 may have a meandering cross-sectional shape by bending the single plate having predetermined width and length several times. Accordingly, the cross-section of the mounting frame may have a substantially lateral W shape. Bending, roll forming, forming, or the like may be used as the machining.

The cross-sectional shape of the mounting frame 40 may be adjusted based on a design condition, and a through slit 42 may be formed in advance in a blanking process of the plate.

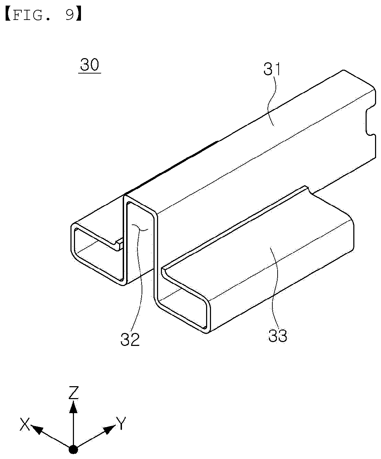

FIG. 9 is a perspective view showing a portion of a reinforcing material shown in FIG. 8.

The reinforcing material 30 may be fixedly installed on an inner surface of the case body 1 where the battery cells are accommodated, that is, on the bottom plate 10. The reinforcing material may be fixed to the bottom plate by welding or the like, and a fixing method is not necessarily limited thereto.

In addition, the reinforcing material 30 may be integrally formed by machining a single sheet of metal, such as steel. The reinforcing material may be formed by bending, roll forming, forming, or the like.

For example, when manufactured by the roll forming, the reinforcing material 30 may use even ultra-high strength steel having tensile strength of about 980 MPa or more without difficulty. Moreover, when using the roll forming, it may be easier to compensate for springback than using press forming, and reduce a corner radius of the reinforcing material.

In more detail, the reinforcing material 30 may be formed of a plate such as 1470 MART steel having a thickness of about 1.0 mm to 1.2 mm produced by the present applicant.

Here, the thickness of the plate for the reinforcing material 30 may be greater than that of a plate for the side frame 20 and thinner than that of a plate for the mounting frame 40.

The reinforcing material 30 may be formed by bending a single plate having predetermined width and length several times and molding the same to have a substantially hat-shaped cross-sectional shape. Accordingly, the reinforcing material may include a body 31 formed in a substantially downwardly open U-shape and having a hollow part 32, and a support part 33 extending from an opening end of the hollow part that extends in a longitudinal direction (Y-direction) of the body to each of two sides of the body in a width direction (X-direction). That is, the support part may extend from an end of the body in the width direction (X-direction) of the body.

Here, the support part 33 may also have a closed cross-section by being bent in a direction opposite to a direction in which the body 31 is bent and then welding an end of the support part to the body.

In addition, the support parts may be omitted in some regions of the body that form both ends of the reinforcing material 30 in the longitudinal direction, and both the ends of the reinforcing material having the support parts omitted in this way may be formed by being reflected on the plate in the blanking process.

The support part 33 of the reinforcing material 30 and the bottom plate 10 may be joined to each other to achieve watertightness therebetween by the welding such as the arc welding or laser welding. For example, the support part 33 may be welded to the bottom plate over its entire length in the longitudinal direction (Y-direction), thereby ensuring watertightness between the support part of the reinforcing material and the bottom plate. In this way, a welded portion may be formed between a flange of the reinforcing material and the bottom plate.

Here, the hollow part 32 of the body 31 included in the reinforcing material 30 may have a closed cross-section by being coupled to the bottom plate 10.

In addition to the function of fixing the reinforcing material 30 to the bottom plate 10, the support part 33 may also function to support an arbitrary component installed in the case body 1, such as a cooling plate.

Both the ends of the reinforcing material 30 in the longitudinal direction (Y-direction) may be in contact with the side frames 20, and inserted into and pass through to be coupled to the side frames. As shown in FIG. 7 and described above, the through slit 22 may be formed on each of two side walls of the side frame in contact with an end of the reinforcing material, and the end of the reinforcing material may be inserted and shape-fitted into the through slit, pass through the side frame, and continue to extend in the Y-direction of the side frame.

The end of the reinforcing material 30 may be inserted and shape-fitted into the through slit 22 of the side frame 20 to completely close the through slit, thereby ensuring watertightness between the end of the reinforcing material and the side frame.

In an inner sidewall 23 of each of the two side walls of the side frame 20 in contact with the end of the reinforcing material 30, the inner sidewall 23 forming at least the inner surface of the case body 1, a matching line formed by inserting and shape-fitting the end of the reinforcing material into the through slit 22 may be welded by, for example, the arc welding, the laser welding, or the like, and a welded portion W may thus be formed between the end of the reinforcing material and the side frame as shown in FIG. 5.

It is thus possible to further secure a firm coupling between the end of the reinforcing material 30 and the side frame 20 and the watertightness therebetween simultaneously.

The end of the reinforcing material 30, that is, an end of the body 31 may pass through the side frame 20 in the width direction (Y-direction) of the side frame and protrude from the side frame, and then be in contact with an inner surface of the mounting frame 40.

Optionally, a concave groove (not shown) may be formed in the inner surface of the mounting frame 40, and the end of the reinforcing material 30 extending into the side frame, that is, the end of the body 31 may be seated in the concave groove.

Meanwhile, the support part 33 of the reinforcing material 30 may be in contact with the inner sidewall 23 of the side frame 20 that forms the inner surface of the case body 1. For example, the support part may not pass through the inner sidewall.

In order to secure the watertightness, the portion in which the components included in the case body 1 are coupled to each other, that is, the welded portion may further use, for example, coating of plastic material such as acrylic resin, epoxy resin, silicone resin, or the like.

At least one piece of reinforcing material 30 may be provided. The number of pieces of reinforcing material may be determined based on a magnitude of an externally applied collision.

As such, in the battery case according to the third exemplary embodiment of the present disclosure, the reinforcing material 30 having a bent hat-shaped cross-section may be disposed on the bottom of the case body 1, and the reinforcing material may extend on the bottom of the case body to be in contact with the side frame 20, pass through the side frame, and then protrude from the side frame to be in contact with the inner surface of the mounting frame 40. That is, the reinforcing material may extend and be coupled to the side frame and the mounting frame.

For example, in an event of a side collision of an electric vehicle or the like, the mounting frame 40 of the battery case that receives collision energy first may first be deformed.

Here, in the battery case according to the third exemplary embodiment of the present disclosure, the reinforcing material 30 may function to resist the collision when the mounting frame 40 starts to be deformed due to the side collision. In addition, even when the side frame 20 is deformed, the reinforcing material may function to resist the collision and the deformation.

Therefore, according to the present disclosure, the battery case may protect the cells therein and minimize an amount of intrusion into the battery casein the event of the side collision.

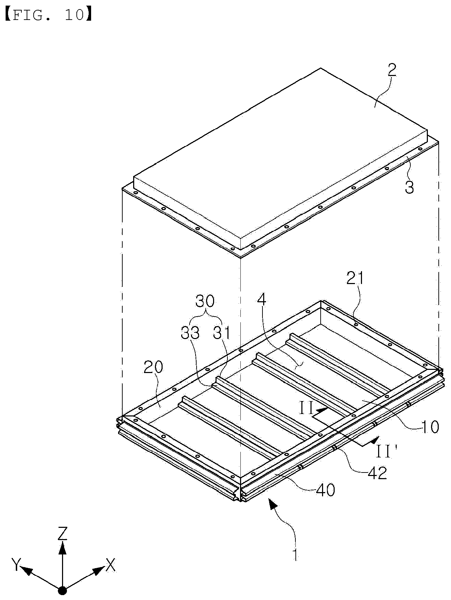

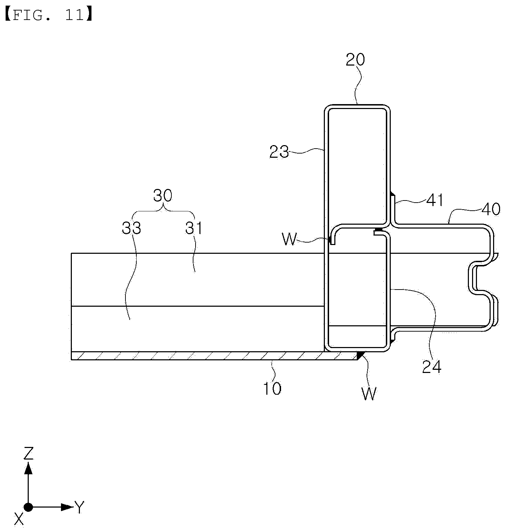

FIG. 10 is an exploded perspective view showing a battery case according to a fourth exemplary embodiment of the present disclosure, and FIG. 11 is a view taken along line II-II' of FIG. 10.

In the battery case according to the fourth exemplary embodiment of the present disclosure, a case body 1 may include a bottom plate 10, a side frame 20, a mounting frame 40, and at least one piece of reinforcing material 30.

Here, the battery case according to the fourth exemplary embodiment of the present disclosure may be different from the battery case according to the first to third exemplary embodiments only in the reinforcing material 30 of the case body 1 that is changed to sequentially pass through the side frame 20 and the mounting frame 40. The remaining components thereof may be configured and used in the same manner as described in the first to third exemplary embodiments of the present disclosure, and the description thus omits detailed descriptions of the configurations and operations of the remaining components.

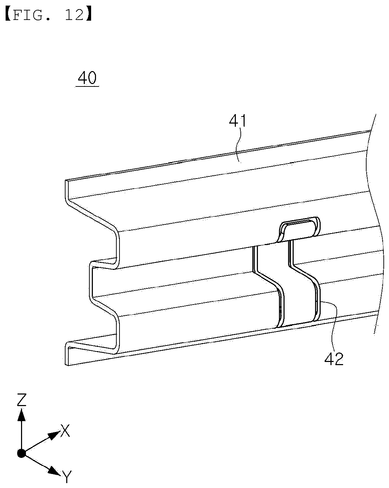

FIG. 12 is a perspective view showing a portion of a mounting frame shown in FIG. 11.

As described above, the mounting frame 40 may be coupled to an outer sidewall 24 of the side frame 20 that forms an outer surface of the battery case. For example, a flange 41 may be positioned on the mounting frame, and the flange of the mounting frame may be welded to an outer sidewall of the side frame by arc welding or the like.

The mounting frame 40 may be fixed to, for example, a side member of a vehicle body by bolting or the like. The battery case may thus be fixed to the vehicle body.

In addition, the mounting frame 40 may act as a member first coping with collision among the components of the battery case in an event of the collision.

As shown in FIG. 12, a through slit 42 may be formed in a predetermined position of the mounting frame 40.

The through slit 22 may have a shape corresponding to a cross-sectional shape of the reinforcing material 30 to be described below, and the through slit and the reinforcing material may thus be shape-fitted to each other when an end of the reinforcing material is inserted into the through slit.

The mounting frame 40 may be formed by machining a single piece of metal, for example steel.

In more detail, the mounting frame 40 may be formed of a plate such as 1470 MART steel having a thickness of 1.2 mm or more produced by the present applicant.

The mounting frame 40 may have a meandering cross-sectional shape by bending the single plate having predetermined width and length several times. Accordingly, a cross-section of the mounting frame may have a substantially lateral W shape. Bending, roll forming, forming, or the like may be used as the machining.

The cross-sectional shape of the mounting frame 40 may be adjusted based on a design condition, and the through slit 42 may be formed by punching a slit in advance in a blanking process of the plate.

Both ends of the reinforcing material 30 in the longitudinal direction (Y-direction) may be in contact with the mounting frames 40, and pass through the mounting frames. As described above, the through slit 42 may be formed in the mounting frame in contact with the end of the reinforcing material, and the end of the reinforcing material may be inserted and shape-fitted into the through slit, pass through the mounting frame, and then protrude outward from the mounting frame.

The end of the reinforcing material 30, that is, an end of the body 31 may pass through the side frame 20 in the width direction (Y-direction) of the side frame and protrude from the side frame, and then pass through the through slit 42 of the mounting frame 40 and protrude outward, and the welding may thus be applied to ensure watertightness of the battery case.

A length of the end of the reinforcing material 30 passing through the mounting frame 40 and protruding from the mounting frame in the longitudinal direction (Y-direction) of the reinforcing material may be in a range of about 5 to 10 mm. When the length of the protruding portion is less than 5 mm, the reinforcing material may be difficult to be welded, and when the length is more than 10 mm, it may cause interference between the reinforcing material and nearby parts, thus making it difficult for the reinforcing material to be mounted in the battery case.

In this way, the protruding end of the reinforcing material 30 and the through slit 42 of the mounting frame 40 may be joined to each other by the welding such as the arc welding or laser welding to form a welded portion (not shown) therebetween, thereby ensuring watertightness between the end of the reinforcing material and the mounting frame.

In order to secure the watertightness, the portion in which the components included in the case body 1 are coupled to each other, that is, the welded portion may further use, for example, coating of plastic material such as acrylic resin, epoxy resin, silicone resin, or the like.

Meanwhile, a support part 33 of the reinforcing material 30 may be in contact with an inner sidewall 23 of the side frame 20 that forms an inner surface of the case body 1. For example, the support part may not pass through the inner sidewall.

At least one piece of reinforcing material 30 may be provided. The number of reinforcing materials may be determined based on a magnitude of an externally applied collision.

As such, in the battery case according to the fourth exemplary embodiment of the present disclosure, the reinforcing material 30 having a bent hat-shaped cross-section may be disposed on the bottom of the case body 1, and the reinforcing material may extend on the bottom of the case body to be in contact with the side frame 20, pass through the side frame, then protrude from the side frame to be in contact with the mounting frame 40, and then pass through the mounting frame. That is, the reinforcing material may extend and be coupled to the side frame and the mounting frame.

For example, in an event of a side collision of an electric vehicle or the like, the mounting frame 40 of the battery case that receives collision energy first may first be deformed.

Here, in the battery case according to the fourth exemplary embodiment of the present disclosure, the reinforcing material 30 may function to resist the collision when the mounting frame 40 starts to be deformed due to the side collision. In addition, even when the side frame 20 is deformed, the reinforcing material may function to resist the collision and the deformation.

Therefore, according to the present disclosure, the battery case may protect the cells therein and minimize an amount of intrusion into the battery casein the event of the side collision.

The spirit of the present disclosure is illustratively described hereinabove. It is to be appreciated by those skilled in the art that various modifications and alterations may be made without departing from the essential features of the present disclosure.

For example, this specification and drawings describes and show an example in which the reinforcing material 30 extends in the width direction (Y-direction) of the case body 1 parallel to a left-right direction of the vehicle. However, the present disclosure is not necessarily limited thereto, and the reinforcing material may extend in the longitudinal direction (X-direction) of the case body parallel to a front-rear direction of the vehicle and cope with frontal collision of the vehicle.

Accordingly, the exemplary embodiments disclosed in the present disclosure are not to limit the spirit of the present disclosure, but are to describe the present disclosure, and the scope of the present disclosure is not limited by the exemplary embodiments. The scope of the present disclosure should be interpreted by the following claims, and it should be interpreted that all the spirits equivalent to the following claims fall within the scope of the present disclosure.

### [Description Of Reference Numerals]

| | |
|---|---|
| 1: Case Body | 2: Cover |
| 3: Flange Part | 4: Space Part |
| 10: Bottom Plate | 20: Side Frame |
| 21: Fastening Hole | 22, 42: Through Slit |
| 30: Reinforcing Material | 31: Body |
| 32: Hollow Part | 33: Support Part |
| 40: Mounting Frame | 41: Flange |

## Claims

1. A battery case comprising:
a case body for accommodating a battery cell; and
a cover coupled to the case body,
wherein the case body includes:
a bottom plate;
side frames coupled to the bottom plate to surround the battery cell, and including inner sidewalls and outer sidewalls;
a mounting frame coupled to the outer sidewall of the side frame; and
at least one piece of reinforcing material disposed on the bottom plate and having both ends thereof in a longitudinal direction inserted into the side frames,
wherein the end of the reinforcing material is in contact with the mounting frame by passing through the inner sidewall and outer sidewall of the side frame.

2. The battery case of claim 1, wherein the reinforcing material includes
a body passing through the inner sidewall and outer sidewall of the side frame, and
a support part extending from an end of the body in a width direction of the body and in contact with the inner sidewall of the side frame.

3. The battery case of claim 2, wherein a through slit is formed in the inner sidewall or outer sidewall of the side frame, and
the end of the body is inserted and shape-fitted into the through slit of the side frame.

4. The battery case of claim 3, wherein a welded portion is formed between the reinforcing material and the through slit of the side frame.

5. The battery case of claim 3, wherein a concave groove is formed in an inner surface of the mounting frame, and
the end of the body is seated in the concave groove.

6. The battery case of claim 3, wherein the through slit is formed in the mounting frame, and
the end of the body passes through the mounting frame.

7. The battery case of claim 6, wherein the end of the body passes through the mounting frame and protrudes from the mounting frame, and
a welded portion is formed between the body and the through slit of the mounting frame.

8. The battery case of claim 1, wherein a thickness of a plate for the reinforcing material is greater than that of a plate for the side frame and thinner than that of a plate for the mounting frame.

9. The battery case of any one of claims 1 to 8, wherein the side frame has at least one closed cross-section by bending a single plate two or more times and then welding meeting ends thereof.
